(19) 

Europäisches Patentamt
European Patent Office
Office européen des brevets

(11) **EP 3 657 396 A1**

(12) **EUROPEAN PATENT APPLICATION**
published in accordance with Art. 153(4) EPC

(43) Date of publication:
   27.05.2020 Bulletin 2020/22

(21) Application number: 18835623.2

(22) Date of filing: 17.07.2018

(51) Int Cl.:
   *G06K 19/077* (2006.01)   *H01P 11/00* (2006.01)
   *H01Q 9/04* (2006.01)

(86) International application number:
   **PCT/JP2018/026768**

(87) International publication number:
   **WO 2019/017353 (24.01.2019 Gazette 2019/04)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority:   **18.07.2017   JP 2017139233**

(71) Applicant: **Phoenix Solution Co., Ltd.
   Kanazawa-shi, Ishikawa 920-8203 (JP)**

(72) Inventor: **SUGIMURA Shiro
   Kanazawa-shi
   Ishikawa 920-8203 (JP)**

(74) Representative: **TBK
   Bavariaring 4-6
   80336 München (DE)**

(54)   **RF TAG ANTENNA AND METHOD FOR MANUFACTURING RF TAG AND RF TAG ANTENNA**

(57)   [Problem] To provide: an RF tag antenna capable of achieving a low profile or receiving a non-directional radio wave; and a method for manufacturing an RF tag and the RF tag antenna. [Solution] This RF tag antenna 100 is adhered to a conductive member 900, and has a plate-shaped antenna unit and an inductor pattern L. The plate-shaped antenna unit receives a radio wave transmitted from a reading device, and comprises: a first waveguide element part 210 and a second waveguide element part 220 which are formed extending in the longitudinal direction; a first insulating base stacked on the first waveguide element part 210 and adhered to the conductive member 900; a power supply part 230 which electrically connects the first waveguide element part 210 and the second waveguide element part 220; and a short-circuiting part 240 which forms an electrical connection. The inductor pattern L is formed by the first waveguide element part 210, the short-circuiting part 240, the second waveguide element part 220, and the power supply part 230.

FIG. 1

EP 3 657 396 A1

**Description**

Technical Field

The present invention relates to a low-profile RF tag antenna, an RF tag, and a method of manufacturing an RF tag antenna.

Background Art

For example, the patent literature PTL 1 (Japanese Patent Laid-Open No. 2015-152827) discloses an RFID tag that can be manufactured with excellent production efficiency and prevent damage to an IC chip.
The RFID tag described in PTL 1 includes a substrate, a first adhesive layer, a peeling layer laminated upon the substrate via the first adhesive layer, and an RFID label having a removable second adhesive layer and an RFID inlet, where the peeling layer has a peeling part and a remaining part other than the peeling part, a slit for which forms an exposed section of the first adhesive layer by removal of the peeling layer is formed between the peeling part and the remaining part, and the RFID inlet is stuck via the second adhesive layer upon the remaining portion in the surface opposite to the surface of contact with the substrate or the first adhesive layer.
The patent literature PTL 2 (Japanese Patent Laid-Open No. 2016-170576) discloses an RFID label that has a simple structure, and is capable of separating an antenna section of an RFID from a metal article to which the RFID label is attached, and providing a sufficient communication distance.
In the RFID label described in PTL 2, which is an RFID label manufactured by pasting flexible exterior materials, from the front side and the rear side, to an inlet in which an RFID chip and an antenna for communications with external devices provided on a circuit board are electrically connected, the RFID label includes a portion where the inlet is included and another portion where the inlet is not included extending therefrom, and an adhesive means is provided on one of the surfaces of the exterior materials at the portion where the inlet is not included.
The patent literature PTL 3 (Japanese Patent Laid-Open No. 2014-194596) discloses an RF tag capable of being stuck on a curved-surface portion of the surface of a metal pipe forming a basket wagon or a cart rack.
In the RF tag described in PTL 3, the RF tag includes an inlay including an IC chip and an antenna, a planar auxiliary antenna laminated in an insulated state on the inlay, and a substrate having the laminated inlay and the auxiliary antenna mounted thereon and functioning as a dielectric constant adjustment layer in relation to the mounted inlay, where the substrate has flexibility allowing to be stuck in a strip like manner and in a surface contact state in a length direction on a surface of a metal columnar member.
The patent literature PTL 4 (Japanese Patent Laid-Open No. 2010-262091) discloses an RFID label and a slip having the RFID label having a preferable external appearance as a product, being capable of eliminating defective printing, and causing no glue remaining even when being removed from a target of adhesion.
In the RFID label described in PTL 4, a label is stuck to the surface of a ground paper, an RFID inlet is applied on a part corresponding to the label on the back surface of the ground paper, where a peeling part for removing from the label the outer part beyond the cut line of the ground paper is provided by the cut line which cuts the ground paper along the periphery of the RFID inlet and a releasable adhesive layer applied on the surface of the ground paper on the outer side relative to the cut line of the ground paper.
The patent literature PTL 5 (Japanese Patent Laid-Open No. 2008-097426) discloses an RFID medium exhibiting a fine curve while maintaining functionality of a reflection plate.
In the RFID medium described in PTL 5, a conductive antenna is formed on a base material having elasticity, where the RFID medium includes an inlet section including an IC chip connected to the antenna and capable of writing and/or reading information via the antenna in a non-contact state; and a reflection plate arranged on the side opposite to the surface of the base material on which the antenna is formed; and a non-conductive plate material having elasticity and provided between the inlet section and the reflection plate, the reflection plate having a plurality of slits extending at least in one direction.

Citation List

Patent Literature

Patent Literature 1: Japanese Patent Laid-Open No. 2015-152827
Patent Literature 2: Japanese Patent Laid-Open No. 2016-170576
Patent Literature 3: Japanese Patent Laid-Open No. 2014-194596

Patent Literature 4: Japanese Patent Laid-Open No. 2010-262091
Patent Literature 5: Japanese Patent Laid-Open No. 2008-097426

Summary of Invention

Technical Problem

An object of the present invention is to provide an RF tag antenna, an RF tag, and a method of manufacturing an RF tag antenna enabling low-profile configuration and capable of receiving omnidirectional radio waves.

Solution to Problem

(1) An RF tag antenna according to one aspect is an RF tag antenna stuck on a conductive member, the RF tag antenna including: a first waveguide element section and a second waveguide element section formed to extend in a longitudinal direction; a first insulating substrate laminated on the first waveguide element section and stuck to the conductive member; a power feeding section providing electrical connection between the first waveguide element section and the second waveguide element section; and a power feeding section providing electrical connection between the first waveguide element section and the second waveguide element section; and a short-circuiting section providing electrical connection between the first waveguide element section and the second waveguide element section, the RF tag antenna including a plate-shaped antenna section and an inductor pattern section, the plate-shaped antenna section is formed by the first insulating substrate, the first waveguide element section, the second waveguide element section, the power feeding section, and the short-circuiting section and configured to receive radio waves transmitted from a reading device, and the inductor pattern section is formed by the first waveguide element section, the short-circuiting section, the second waveguide element section, and the power feeding section.

In this case, as a result of the fact that the RF tag antenna is stuck on the conductive member, the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna. By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(2) An RF tag antenna according to another aspect is an RF tag antenna stuck to a conductive member, the RF tag antenna including: a first waveguide element section and a second waveguide element section formed to extend in a longitudinal direction; a first insulating substrate laminated on the first waveguide element section and stuck to the conductive member; a power feeding section providing electrical connection between the first waveguide element section and the second waveguide element section; a plate-shaped antenna section formed by the second waveguide element section and the conductive member and configured to receive radio waves transmitted from a reading device; and an inductor pattern section formed in the first waveguide element section.

In this case, as a result of the fact that it is stuck on the conductive member, the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna (L-type antenna, inverted L-type antenna). By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(3) In an RF tag antenna according to the third invention, which is contemplated in the context of the RF tag antenna according to the one aspect or the second invention, the first insulating substrate may only be laminated on the entire back surface of the first waveguide element section.

In this case, since the first insulating substrate is only laminated upon the entire back surface of the first waveguide element section, as a result of the fact that it is stuck on the conductive member, it is made possible to readily form the capacitor section by the first waveguide element section, the second waveguide element section, and the conductive member as well as the first insulating substrate.

(4) In an RF tag antenna according to the fourth invention, which is contemplated in the context of the RF tag antenna according to any one of the one aspect to the third invention, an adhesive layer capable of adhering to the conductive member may be provided on a surface of the first insulating substrate opposite to a surface of the first insulating substrate laminated on the first waveguide element section.

In this case, since the adhesive layer capable of adhering to the conductive layer is provided on the surface of the first insulating substrate, the RF tag antenna can be readily stuck on the conductive member.

(5) In an RF tag antenna according to the fifth invention, which is contemplated in the context of the RF tag antenna according to any one of the one aspect to the fourth invention, an outer shape of the first waveguide element section may mainly have a flat rectangle shape, a first inductor pattern forming section of the first waveguide element section forming an inductor pattern section may have a rectangular shape, and a relative angle difference between the flat rectangle shape and the rectangular shape may be any one selected from the group consisting of 0 degrees, 45 degrees, 90 degrees, 135 degrees, and 180 degrees.

In this case, the outer shape of the first waveguide element section is mainly defined by the flat rectangle shape. Alternatively, it may be defined by the long side and the short side. Further, the first inductor pattern forming section of the first waveguide element section which forms the inductor pattern section is mainly defined by the rectangular shape, and, by selecting the relative angle difference between the long side or the short side and the rectangular shape from any one of 0 degrees, 45 degrees, 90 degrees, 135 degrees, and 180 degrees, the inductor pattern L can be changed and thereby the frequency according to the specifications can be changed.

(6) In an RF tag antenna according to the sixth embodiment, which is contemplated in the context of the RF tag antenna according to any one of the one aspect to the fourth invention, an outer shape of the first waveguide element section may mainly have a flat rectangle shape, a first inductor pattern forming section of the first waveguide element section forming an inductor pattern section may have a rectangular shape, and a relative angle difference between the flat rectangle shape and the first inductor pattern forming section may be changed at a predetermined location on the first waveguide element section to a predetermined angle.

In this case, the outer shape of the first waveguide element section is mainly defined by the flat rectangle shape. Alternatively, it may be defined by the long side and the short side. Further, the first inductor pattern forming section of the first waveguide element section which forms the inductor pattern section is mainly defined by the rectangular shape, and the inductor pattern L can be changed without changing the coil inductance or the antenna size by changing the relative angle difference between the long side or the short side and the rectangular shape, which is defined according to the specifications, and thereby the frequency according to the specifications can be changed.

(7) In an RF tag antenna according to the seventh invention, which is contemplated in the context of the RF tag antenna according to the fifth or sixth invention, the first inductor pattern forming section may be connected to a first waveguide element section with a part of the rectangular shape serving as a common connection.

In this case, as the first inductor pattern forming section connects a part of the rectangular shape to the second waveguide element section, RF tag antenna resistant to noise can be formed.

(8) An RF tag according to one aspect includes: a conductive member; a first waveguide element section formed to extend in a longitudinal direction; a second waveguide element section extending in the longitudinal direction and being stuck to the conductive member for electrical connection thereto; a first insulating substrate laminated on the first waveguide element section and stuck to the conductive member; a power feeding section providing electrical connection between the first waveguide element section and the second waveguide element section; a short-circuiting section providing electrical connection between the first waveguide element section and the second waveguide element section; and an IC chip that operates based on radio waves transmitted from the reading device, the RF tag further including a plate-shaped antenna section formed by the first insulating substrate, the first waveguide element section, the second waveguide element section, the power feeding section, and the short-circuiting section and configured to receive radio waves transmitted from a reading device; and an inductor pattern section being formed by the first waveguide element section, the short-circuiting section, the second waveguide element section, and the power feeding section; a capacitor section formed by the first waveguide element section, second waveguide element section, and the conductive member as well as the first insulating substrate; and a resonant circuit that resonates, by the inductor pattern section and the capacitor section, in a frequency band of the radio waves transmitted from the reading device.

In this case, the inductor pattern section is formed by the first waveguide element section, the short-circuiting section, the second waveguide element section, and the power feeding section, and the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna. By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(9) An RF tag according to another aspect includes: a conductive member; a first waveguide element section formed to extend in a longitudinal direction; a second waveguide element section extending in the longitudinal direction and being stuck to the conductive member for electrical connection thereto; a first insulating substrate laminated on the first waveguide element section and stuck to the conductive member; a power feeding section providing electrical connection between the first waveguide element section and the second waveguide element section; and an IC chip that operates based on radio waves transmitted from the reading device, the RF tag further including: a plate-shaped antenna section formed by the second waveguide element section and the conductive member and configured to receive radio waves transmitted from a reading device; an inductor pattern section formed by the first waveguide element section; a capacitor section formed by the first waveguide element section, a second waveguide element section, and the conductive member as well as the first insulating substrate; and a resonant circuit that resonates, by the inductor pattern section and the capacitor section, in a frequency band of the radio waves transmitted from the reading device.

In this case, the inductor pattern section is formed by the first waveguide element section and the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna. By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(10) In an RF tag according to the tenth invention, which is contemplated in the context of the RF tag according to the one aspect or the other aspect, the resonant circuit may have a resonant frequency specified with inductance of the inductor pattern, capacitance of the capacitor, and equivalent capacitance inside the IC chip taken into account.

In this case, the resonant circuit can appropriately perform communications by specifying the resonant frequency with the inductance of the inductor pattern, the capacitance of the capacitor, and the equivalent capacitance inside the IC chip taken into account.

(11) A method of manufacturing an RF tag antenna according to one aspect is a method of manufacturing an RF tag antenna having a first waveguide element section and a second waveguide element section formed to extend in a longitudinal direction and being stuck to a conductive member, the method including: a power feeding section forming step of forming a power feeding section providing electrical connection between the first waveguide element section and the second waveguide element section; a short-circuiting section forming step of forming a short-circuiting section providing electrical connection between the first waveguide element section and the second waveguide element section; an antenna forming step of forming a plate-shaped antenna section formed by the first insulating substrate, the first waveguide element section, the second waveguide element section, the power feeding section, and the short-circuiting section and configured to receive radio waves transmitted from a reading device; an inductor pattern forming step of forming the inductor pattern section being formed by the first waveguide element section, the short-circuiting section, the second waveguide element section, and the power feeding section; and a lamination step of laminating a first insulating substrate to be stuck to the conductive member on the first waveguide element section.

In this case, the inductor pattern section is formed by the first waveguide element section, the short-circuiting section, the second waveguide element section, and the power feeding section, and the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna. By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(12) An RF tag antenna manufacturing method according to another aspect is a method of manufacturing an RF tag antenna having a first waveguide element section and a second waveguide element section formed to extend in a longitudinal direction and being stuck to a conductive member, the method including: a power feeding section forming step of forming a power feeding section providing electrical connection between the first waveguide element section and the second waveguide element section; an antenna forming step of forming a plate-shaped antenna section formed by the second waveguide element section and the conductive member and configured to receive radio waves transmitted from a reading device; an inductor pattern forming step of forming an inductor pattern section formed in the first waveguide element section; and a lamination step of laminating a first insulating substrate to be stuck to the conductive member on the first waveguide element section.

In this case, the inductor pattern section is formed by the first waveguide element section and the capacitor section is formed by the first waveguide element section, the second waveguide element section, and the conductive member as well as the first insulating substrate. As a result, a resonant circuit is formed and efficient transmission and reception can be performed.

In addition, by sticking the second waveguide element section on the conductive member, the conductive member as such can be utilized as an antenna. By virtue of this, the communication sensitivity can be dramatically improved. Further, omnidirectional radio waves can be received.

In particular, when it is stuck to the conductive member, the RF tag antenna as such can be made low-profile. In other words, since the conductive member is utilized as an antenna and a capacitor plate, the configuration can be made low-profile by the size of the capacitor plate.

(13) A method of manufacturing an RF tag antenna according to the thirteenth invention, which is contemplated in the context of the method of manufacturing the RF tag antenna according to the one aspect or the other aspect, may include an angle determination step of changing a relative angle difference between flat rectangle shape of an outer shape of the first waveguide element section and the first inductor pattern section at a predetermined location on the first waveguide element section to a predetermined angle in accordance with a desired frequency so as to form the RF tag antenna.

In this case, the outer shape of the first waveguide element section is mainly defined by the flat rectangle shape. Alternatively, it may be defined by the long side and the short side. Further, the first inductor pattern forming section of the first waveguide element section which forms the inductor pattern section is mainly defined by the rectangular shape, and, by changing the relative angle difference between the long side or the short side and the rectangular shape, which is defined according to the specifications, the inductor pattern L can be changed without changing the coil inductance or the antenna size, and the frequency according to the design specifications can be changed.

Brief Description of Drawings

[Figure 1] Figure 1 is a schematic plan view that illustrates an example of an RF tag antenna according to the present embodiment.

[Figure 2] Figure 2 is a schematic cross-sectional view that illustrates an example of RF tag antenna of the Figure 1.

[Figure 3] Figure 3 is a schematic cross-sectional view that illustrates an example where the RF tag antenna is stuck on a conductive member.

[Figure 4] Figure 4 is a schematic diagram that illustrates an example of an equivalent circuit of the RF tag antenna and the conductive member depicted in Figure 3.

[Figure 5] Figure 5 is a diagram that illustrates another example of a coil section of a first waveguide element of the RF tag antenna according to the present embodiment.

[Figure 6] Figure 6 is a schematic diagram that illustrates an example of the equivalent circuit of the RF tag antenna and the conductive member.

[Figure 7] Figure 7 is a schematic diagram that illustrates yet another example of the coil section of Figure 5.

[Figure 8] Figure 8 is a schematic diagram that illustrates yet another example of the coil section of Figure 5.

[Figure 9] Figure 9 is a schematic diagram that illustrates yet another example of the coil section of Figure 5.

[Figure 10] Figure 10 is a schematic diagram that illustrates an example of the equivalent circuit of the RF tag antenna and the conductive member.

[Figure 11] Figure 11 is a schematic diagram that illustrates another example of the coil section of Figure 7.

[Figure 12] Figure 12 is a schematic diagram that illustrates another example of the coil section of Figure 8.

[Figure 13] Figure 13 is a schematic diagram that illustrates yet another example of the coil section of Figure 5.

[Figure 14] Figure 14 is a schematic diagram that illustrates an example of the equivalent circuit of the RF tag antenna and the conductive member depicted in Figure 13.

[Figure 15] Figure 15 is a schematic diagram that illustrates another example of the coil section of Figure 7.

[Figure 16] Figure 16 is a schematic diagram that illustrates another example of the coil section of Figure 8.

Description of Embodiments

The embodiment of the present invention will be described hereinbelow with reference to the drawings. In the following explanations, the same components are indicated by the same reference signs. Also, when the same reference signs are assigned to components, they are the same ones which have the same name and the same function. Accordingly, detailed explanations thereof will not be repeated.

(Present Embodiment)

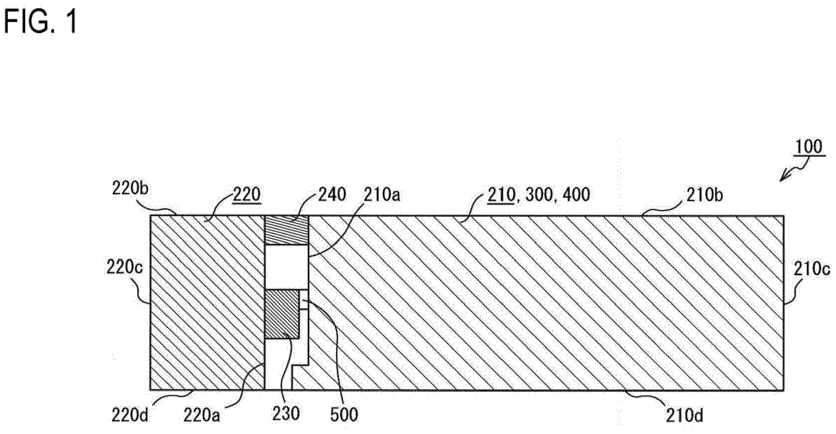

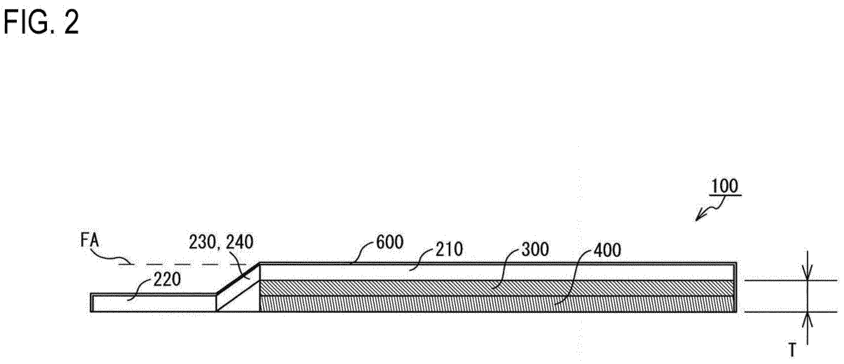

Figure 1 is a schematic plan view that illustrates an example of an RF tag antenna 100 according to the present embodiment, and Figure 2 is a schematic cross-sectional view that illustrates an example of the RF tag antenna 100 of Figure 1. Figures 1 and 2 illustrates a state where an IC chip 500 and a sheet member 600 are provided in the RF tag antenna 100.

As illustrated in Figures 1 and 2, the RF tag antenna 100 includes a first waveguide element section 210, a second waveguide element section 220, a power feeding section 230, a short-circuiting section 240, a first insulating substrate 300, and an adhesive layer 400.

In the RF tag antenna 100 depicted in Figures 1 and 2, the first insulating substrate 300 is only provided on the back side of the first waveguide element section 210.

The power feeding section 230 and the short-circuiting section 240 are formed at the short side of the rectangular shape of the first waveguide element section 210. The second waveguide element section 220 is formed in the power feeding section 230 and the short-circuiting section 240.

It should be noted that the first insulating substrate 300 is not provided at least on the back surface of the second waveguide element section 220.

As a result, in the RF tag antenna 100, the virtual surface FA of the surface of the first waveguide element section 210 and the surface of the second waveguide element section 220 reside at different positions. The surface of the first waveguide element section 210 and the surface of the second waveguide element section 220 do not reside in the same horizontal plane. In other words, the surface of the first waveguide element section 210 and the surface of the second waveguide element section 220 will have a positional relationship according to which a step equal to the thickness T of the first insulating substrate 300 is created. Detailed explanations of the individual portions will be given below.

(First Waveguide Element Section 210 and Second Waveguide Element Section 220)

The first waveguide element section 210 and the second waveguide element section 220 depicted in Figure 1 is made of an aluminum metal thin film in the present embodiment. In general, a thin film in the context of the present embodiment indicates a thickness in the range between 5 $\mu$m and 35 $\mu$m including these values.

The first waveguide element section 210 and the second waveguide element section 220 are formed by techniques such as etching or pattern printing. Accordingly, in the present embodiment, also in the power feeding section 230 and the short-circuiting section 240 which will be described later, the same or similar techniques are used to from them.

As illustrated in Figures 1 and 2, first waveguide element section 210 is mainly made of a flat rectangular shape. The second waveguide element section 220 is also mainly made of a flat rectangular shape. The area of the second waveguide element section 220 in the present embodiment is smaller than the area of the first waveguide element section 210.

The sum of the lengths of the perimeter sides 210a to 210d (including raised and recessed portions in the figures) defining the first waveguide element section 210 is indicated by the value "S1." If the wavelength $\lambda$ (lambda) of radio wave is drawn on, the value S1 is tuned to correspond to any one of $\lambda/4$, $\lambda/2$, $3\lambda/4$, and $5\lambda/8$.

It should be noted that the value S1 is more preferably half the length of the wavelength $\lambda$ of the frequency in use.

In addition, a sum of the lengths of the sides 220a to 220d forming the second waveguide element section 220 is referred to as value "S2." If the wavelength $\lambda$ (lambda) of the radio wave is drawn on, the value S2 is tuned to correspond to any one of $\lambda/4$, $\lambda/2$, $3\lambda/4$, and $5\lambda/8$.

It should be noted that the value is more preferably half the length of the wavelength $\lambda$ of the frequency in use.

(First Insulating Substrate 300)

In the present embodiment, the first insulating substrate 300 depicted in Figures 1 and 2 is made of polystyrene foam. One surface of the first insulating substrate 300 is joined to the back side of the first waveguide element section 210 using an adhesive. In the present embodiment, the first insulating substrate 300 is only formed on the back side of the first waveguide element section 210.

It should be noted that the thickness of the first insulating substrate 300 is desirably in the range between 0.5 mm and 3 mm including these values.

It should be noted that in the present embodiment, it is made of polystyrene foam, but this does not constitute a limitation thereto, and any insulator may be used and other foams or materials having insulating property such as polyethylene, polyimide, and thin foam (volara) may be used.

As has been described in the foregoing, since polystyrene foam is used as the first insulating substrate 300 of the RF tag antenna 100 in the RF tag antenna 100 according to the present embodiment, an opening area of a certain size can be provided, the sensitivity of the plate-shaped antenna including the conductive member 900 which will be described later can be improved.

(Adhesive Layer 400)

The adhesive layer 400 in the present embodiment depicted in Figures 1 and 2 is composed of a double-sided tape. The adhesive layer 400 is provided on the side of the other surface of the first insulating substrate 300.

It should be noted that the adhesive layer 400 is composed of a double-sided tape in the present embodiment, but this does not constitute a limitation thereto, and it may also be provided by formation of other adhesive layers, application of adhesives, or the like. In Figures 1 and 2, illustrations are given on the assumption that the adhesive layer 400 has a thickness for the sake of explanation, but it is actually a thin layer, which is of the level that does not affect the capacitor which will be described later. Also, the double-sided tape may be not the entire surface but a part of the first insulating substrate 300.

In the present embodiment, the reason that the double-sided tape has been described as an example is that, as will be described later, since the RF tag antenna 100 is stuck on the conductive member 900, the double-sided tape can be readily stuck thereon by removing the release paper of the double-sided tape.

(Power Feeding Section 230 and Short-Circuiting Section 240)

As illustrated in Figures 1 and 2, the power feeding section 230 and the short-circuiting section 240 are made of an aluminum metal thin film. The power feeding section 230 and the short-circuiting section 240 are formed between the first waveguide element section 210 and the second waveguide element section 220.

In addition, in the present embodiment, the power feeding section 230 and the short-circuiting section 240 are formed by techniques such as etching or pattern printing simultaneously with the formation of the first waveguide element section 210 and the second waveguide element section 220.

It should be noted that while the power feeding section 230 and the short-circuiting section 240 are formed by etching or pattern printing in the present embodiment, this does not constitute a limitation thereto, and it may be formed in a separate fashion and may be electrically connected to the first waveguide element section 210 and the second waveguide element section 220. For example, a power feeding pin or a short-circuit pin may be used. Also, the width of the short-circuiting section 240 or the power feeding section 230 may be widened.

(IC Chip 500)

The IC chip 500 is provided, as illustrated in Figure 1, between the first waveguide element section 210 and the power feeding section 230. The IC chip 500 is arranged on the side of the upper surface of the first insulating substrate 40 (flush with the first waveguide element section 20). It should be noted that the IC chip 500 may be arranged on the side surface of the first insulating substrate 40 as long as plate-shaped antenna functions properly.

The IC chip 500 operates based on the radio waves received by the plate-shaped antenna of the RF tag antenna 100.

Specifically, the IC chip 500 according to the present embodiment first rectifies part of the carrier wave transmitted from the reading device and then generate power supply voltage necessary for the IC chip 500 itself to operate. Then the IC chip 500 causes the logic circuit for control in the IC chip 500 and nonvolatile memory that stores product specific information or the like to operate by the power supply voltage that has been generated.

In addition, the IC chip 500 causes communication circuit or the like for performing transmission and reception of data with the reading device to operate.

(Sheet Member 600)

The sheet member 600 is mainly made of polyethylene terephthalate. It should be noted that, in addition to polyethylene terephthalate, one or more types of materials or resins having insulating property such as polyimide and polyvinyl chloride may also be used as the sheet member 600.

The sheet member 600 is used to protect the first waveguide element section 210 and the second waveguide element section 220. For this reason, the sheet member 600 preferably has a thickness of several micrometers to several hundred micrometers, more preferably about several tens of micrometers.

Accordingly, while the sheet member 600 is to be provided in the present embodiment, this does not constitute a limitation thereto, and the sheet member 600 may not be provided and other insulation coating treatments may be used.

(RF Tag Antenna 100, IC Chip 500, and Conductive Member 900)

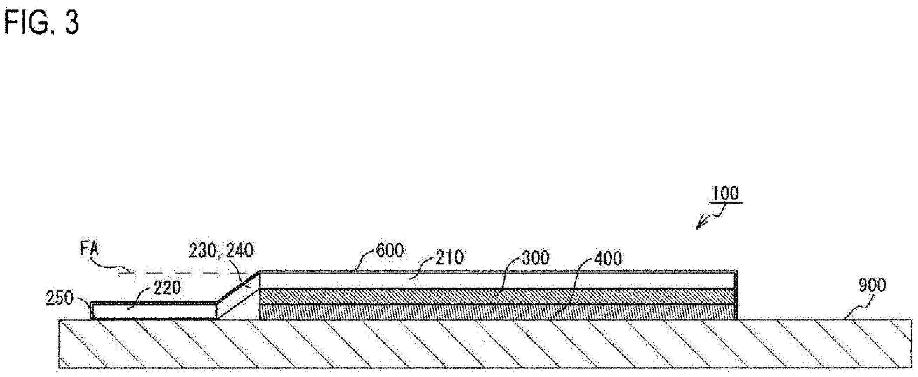

Figure 3 is a schematic cross-sectional view that illustrates an example where the RF tag antenna 100 depicted in Figures 1 and 2 is stuck on the conductive member 900. Also, in Figure 3 as well, the IC chip 500 is provided in the same manner as in Figures 1 and 2.

As illustrated in Figure 3, the RF tag antenna 100 is stuck on the conductive member 900 by means of a conductive adhesive 250 applied on the second waveguide element section 220 of the RF tag antenna 100 and the double-sided tape of the adhesive layer 400.

In the present embodiment, the conductive member 900 is made of a conductive metal plate. Specifically, it has any appropriate metal portion such as a metal box, a box or a case containing a metal plate, a box or a case containing a metal member, etc.

It should be noted that while conductive adhesive 250 is to be used in Figure 3, but this does not constitute a limitation thereto, and it may be a double-sided tape, solder, or, any appropriate conductive adhesives such as 1-component or 2-component epoxy resin.

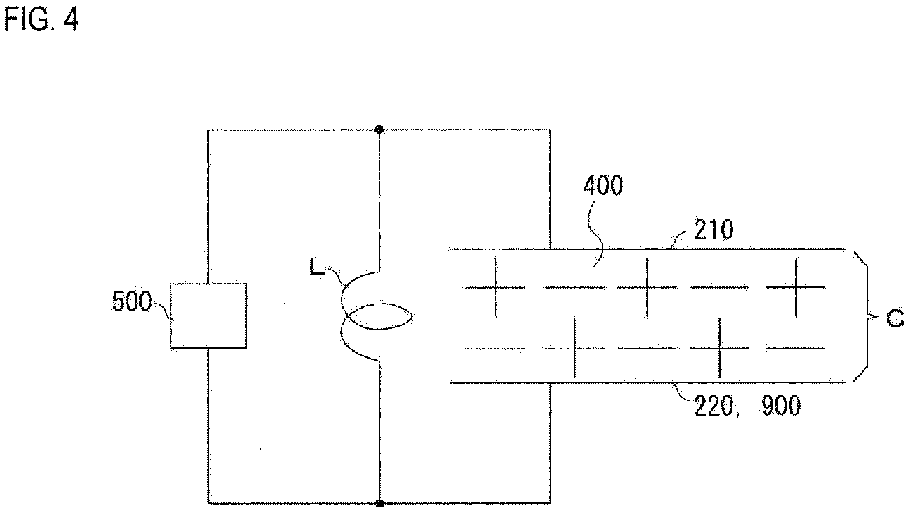

Figure 4 is a schematic diagram that illustrates an example of the equivalent circuit of the RF tag antenna 100 and the conductive member 900 depicted in Figure 3.

As illustrated in Figure 4, the inductor pattern L, the capacitor C, and the IC chip 500 are connected in parallel to each other in the equivalent circuit of the RF tag antenna 100. The inductor pattern L, the capacitor C, and the IC chip 500 configures a resonant circuit that resonate in the frequency band of the radio waves transmitted from the reading device.

The resonant frequency f (Hz) of this resonant circuit is given by the expression (1). The value of the resonant frequency f is tuned such that it falls within the frequency band of the radio waves transmitted from the reading device.

[Expression 1]

$$f = \frac{1}{2\pi\sqrt{L_a \cdot (C_a + C_b)}} \qquad \cdots \cdots (1)$$

In the expression (1), $L_a$ represents the inductance of the inductor pattern L, $C_a$ represents the capacitance of the capacitor 240, and $C_b$ represents the equivalent capacitance inside the IC chip 500.

Here, some components have a capacitor inside the IC chip 500 and the IC chip 500 has stray capacitance. For this reason, when the resonant frequency f of the resonant circuit is to be specified, it is preferable to take the equivalent capacitance $C_b$ inside the IC chip 500 into consideration.

In other words, the resonant circuit should preferably have a resonant frequency f that has been specified with the inductance of the inductor pattern L, the capacitance of the capacitor 240, and the equivalent capacitance $C_b$ inside the IC chip 500 taken into account. It should be noted that, as the $C_b$, for example, it is possible to use a capacitance value disclosed as part of the specifications of the IC chip to be used.

As has been described in the foregoing, by taking the equivalent capacitance $C_b$ inside the IC chip 500 into account, the resonant frequency f of the resonant circuit can be accurately specified to fall within the frequency band of the radio waves. As a result, the reading performance of the RF tag antenna 100 can be further improved. Also, the power supply voltage generated by the IC chip 500 can be further increased.

(Another Example of the Coil Section)

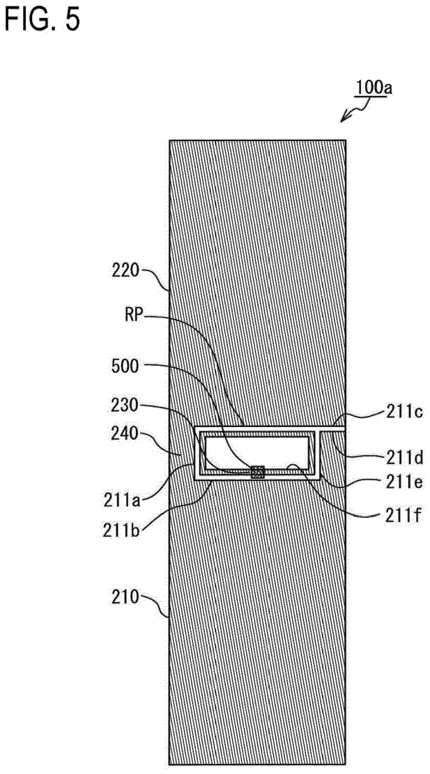

Figure 5 is a diagram that illustrates another example of the coil section of the first waveguide element section 210 of the RF tag antenna 100 according to the present embodiment.

It should be noted that the aspects differing from those of the RF tag antenna 100 according to the present embodiment will be described below.

As illustrated in Figure 5, the coil section of the first waveguide element section 210 of the RF tag antenna 100a is formed by a side 211a, a side 211b, a side 211c, a side 211d, a side 211e, and a rectangular shape 211f.

Here, all the side of the side 211a, the side 211b, the side 211c, the side 211d, the side 211e, and the rectangular shape 211f are provided with any one of 0 degree, 90 degrees, 180 degrees, and 270 degrees with respect to the long side or the short side of the first waveguide element section 210.

As illustrated in Figure 5, the IC chip 500 is provided at the coil section. It should be noted that, while a case is illustrated in Figure 5 where the IC chip 500 is provided substantially at or near the center of the side 211b, it may be arranged at another location as long as it interconnects the coil section and the first waveguide element section 210.

In addition, as illustrated in Figure 5, it is possible to design the RF tag antenna 100a by rotating the coil section about the axis of rotation RP in accordance with the design specifications. As a result, by changing the relative angle difference between the first waveguide element section 210 and the sides defining the coil section in accordance with the design specifications, the inductor pattern L can be changed without changing the coil inductance or the antenna size, and the frequency according to the design specifications can be changed.

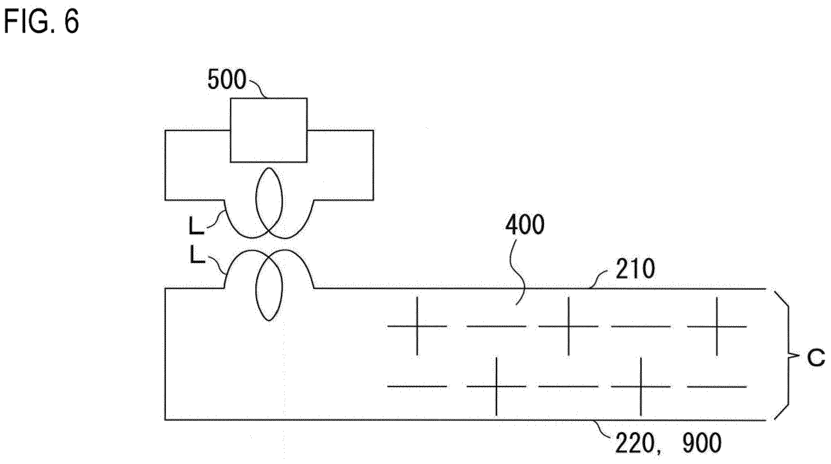

Figure 6 is a schematic diagram that illustrates an example of the equivalent circuit of the RF tag antenna 100a and the conductive member 900 depicted in Figure 5.

As illustrated in Figure 6, the first waveguide element section 210, the second waveguide element section 220, and the conductive member 900 are connected in series to the inductor pattern L. In this case, there is conductor resistance in the inductor pattern L in relation to the first waveguide element section 210, the second waveguide element section 220, and the conductive member 900. Accordingly, capacitor capacitance C of 0.2 PF or 0.3 PF occurs between the first waveguide element section 210, and, the second waveguide element section 220 and the conductive member 900.

In addition, as illustrated in Figure 6, the inductor pattern L is AC-coupled by M coupling.

As a result, the resonant frequency f is determined by the perimeter length of the first waveguide element section 210, the coil L, and the capacitor C.

As has been described in the foregoing, in the RF tag antenna 100a depicted in Figures 5 and 6, in contrast to Figure 4, since multiple inductances of the inductor pattern L can be provided, magnetic stimulation can be performed and the magnetic force can be strengthened. Also, impedance can be freely changed.

(Yet Another Example of the Coil Section)

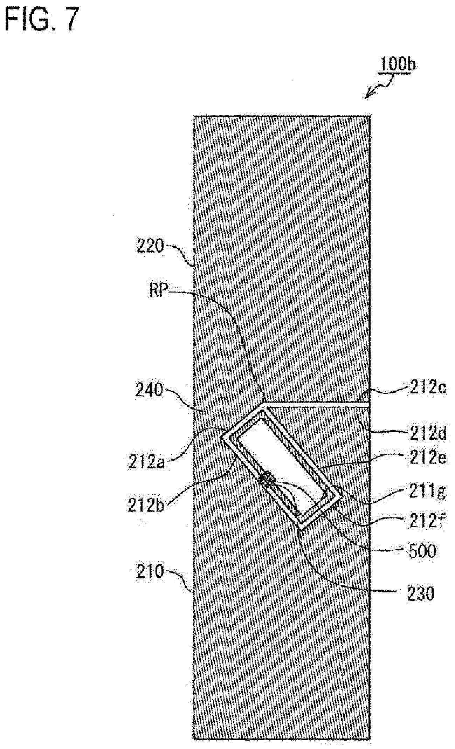

Next, Figure 7 is a schematic diagram that illustrates yet another example of the coil section of Figure 5.

As illustrated in Figure 7, the coil section of the first waveguide element section 210 of the RF tag antenna 100a is formed by a side 212a, a side 212b, a side 212c, a side 212d, a side 212e, a side 212f, and the rectangular shape 212g.

Here, the side 212c and the side 212d are provided at 90 degrees with respect to the long side of the first waveguide element section 210. All the sides of the side 212a, the side 212b, the side 212e, the side 212f, and the rectangular shape 212g are provided at either 45 degrees or 135 degrees with respect to the long side of the first waveguide element section 210.

In other words, in the feature depicted in Figure 7, the coil section is rotated by 45 degrees about the axis of rotation RP of Figure 5.

By virtue of this, the lengths of the sides 212c, 212d of the coil section depicted in Figure 7 can be extended as compared with the coil section depicted in Figure 5, which makes it possible to change the sum of the lengths of the perimeter sides 212a to 212f defining the first waveguide element section 210 (S1, which is $L_a$ in the expression (1)). As a result, in the RF tag antenna 100b, in contrast to Figure 5, the frequency f in accordance with the design specifications can be changed.

(Yet Another Example of the Coil Section)

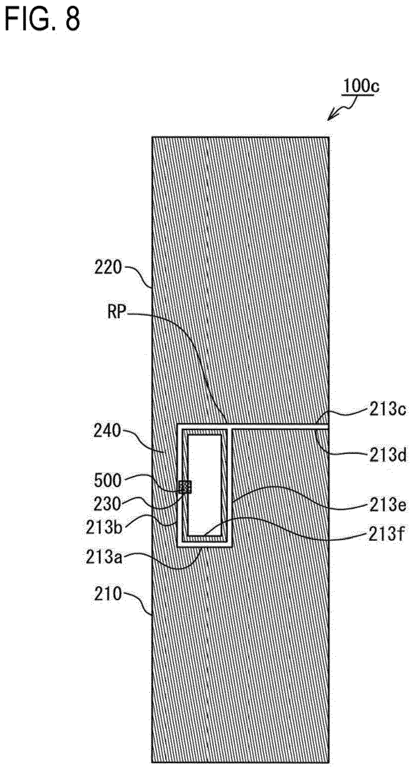

Subsequently, Figure 8 is a schematic diagram that illustrates yet another example of the coil section of Figure 5.

As illustrated in Figure 8, the coil section of the first waveguide element section 210 of the RF tag antenna 100c is formed by a side 213a, a side 213b, a side 213c, a side 213d, a side 213e, and the rectangular shape 213f.

In other words, in Figure 8, the coil section is rotated by 90 degrees about the axis of rotation RP of Figure 5.

By virtue of this, the lengths of the sides 213c, 213d of the coil section depicted in Figure 8 can be extended as compared with the coil section depicted in Figure 5, which makes it possible to change the sum of the lengths of the perimeter sides 213a to 213f defining the first waveguide element section 210 (S1, which is $L_a$ in the expression (1)). As a result, in the RF tag antenna 100c, in contrast to Figure 5, the frequency f in accordance with the design specifications change can be changed.

It should be noted that, while the coil section is rotated by 45 degrees or 90 degrees about the axis of rotation RP in the present embodiment in order to change the inductor pattern L without changing the coil inductance or the antenna size, this does not constitute a limitation thereto, and the size of the coil section may be changed, the notch in the coil forming section as such for forming the inductor pattern L may be extended or shortened, and it may also be designed by rotating it at any other appropriate angles.

(Yet Another Example of the Coil Section)

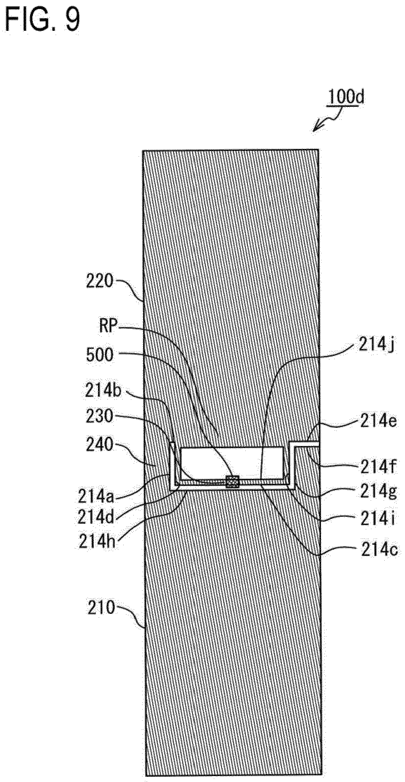

Subsequently, Figure 9 is a schematic diagram that illustrates yet another example of the coil section of Figure 5.
As illustrated in Figure 9, the coil section of the first waveguide element section 210 of the RF tag antenna 100d is formed by sides 214a to side 214i, and the rectangular shape 214j.

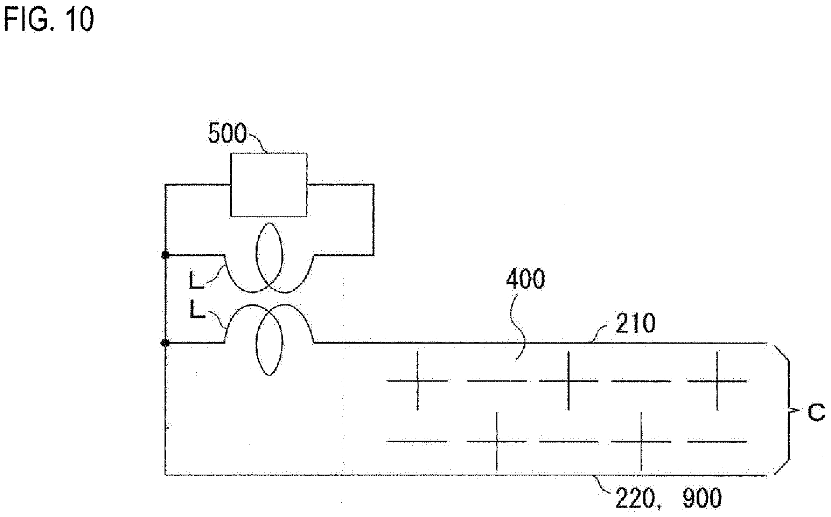

Figure 10 is a schematic diagram that illustrates an example of the equivalent circuit of the RF tag antenna 100c and the conductive member 900 depicted in Figure 9.
As illustrated in Figure 10, in contrast to Figure 6, the common section of the coil section is connected to the second waveguide element section 220. As a result, an RF tag antenna 100d resistant to noise or the like can be obtained when compared with the RF tag antennas 100a, 100b, and 100c.

(Yet Another Example of the Coil Section)

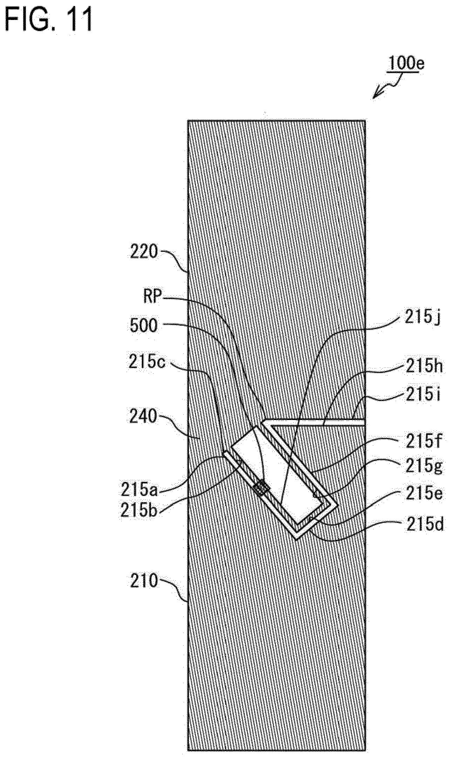

Subsequently, Figure 11 is a schematic diagram that illustrates another example of the coil section of Figure 7.
As illustrated in Figure 11, the coil section of the first waveguide element section 210 of the RF tag antenna 100e is formed by sides 215a to 215i, and the rectangular shape 215j.
Here, the side 215h and the side 215i are provided at 90 degrees with respect to the long side of the first waveguide element section 210. All the side of the sides 215a to 215g, and the rectangular shape 215j are provided at either 45 degrees or 135 degrees with respect to the long side of the first waveguide element section 210.
In other words, in Figure 11, the coil section is rotated by 45 degrees about the axis of rotation RP of Figure 9.
The coil section depicted in Figure 11 is the one that is obtained by connecting the common section of the coil section in Figure 7 to the second waveguide element section 220.
As a result, an RF tag antenna 100e resistant to noise or the like can be obtained when compared with the RF tag antennas 100a, 100b, and 100c.

(Yet Another Example of the Coil Section)

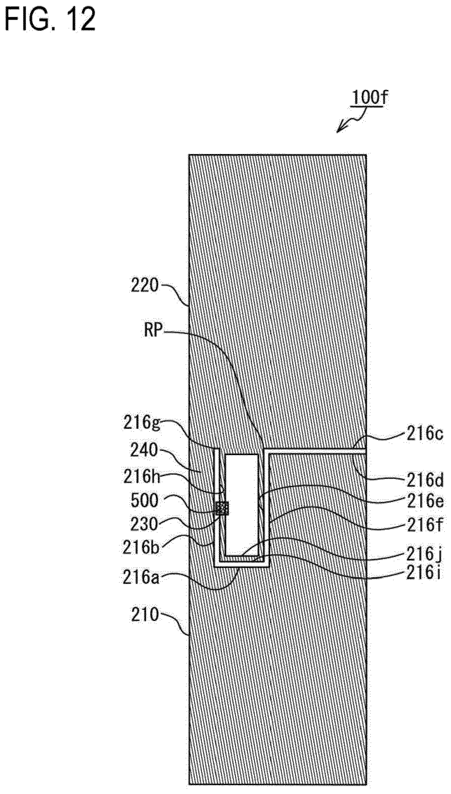

Subsequently, Figure 12 is a schematic diagram that illustrates another example of the coil section of Figure 8.
As illustrated in Figure 12, the coil section of the first waveguide element section 210 of the RF tag antenna 100f is formed by sides 216a to 216i, and the rectangular shape 216j.
The coil section depicted in Figure 12 is obtained by connecting the common section of the coil section in Figure 8 to the second waveguide element section 220.
As a result, an RF tag antenna 100f resistant to noise or the like can be obtained when compared with the RF tag antennas 100a, 100b, and 100c.
It should be noted that the RF tag antenna 100 in Figures 5 to 12 are illustrated in a state where the size of the second waveguide element section 220 is equivalent to that of the first waveguide element section 210, but the size of the second waveguide element section 220 may be reduced as illustrated in Figures 1 and 2 to stick the RF tag antenna 100 upon the conductive member 900.

(Yet Another Example of the Coil Section)

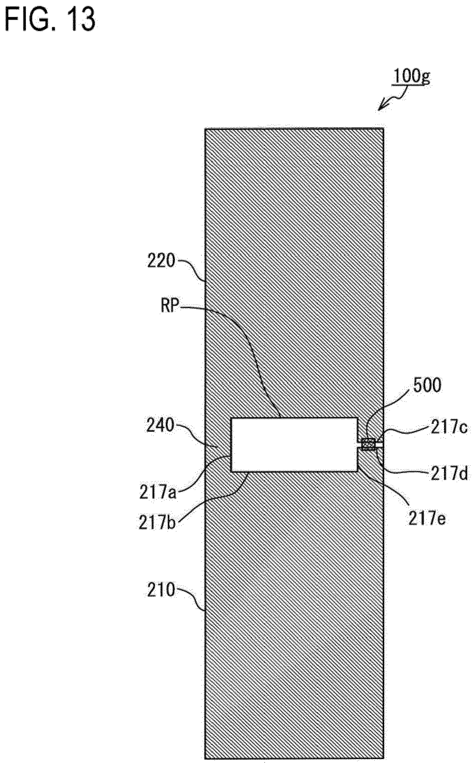

Subsequently, Figure 13 is a schematic diagram that illustrates yet another example of the coil section of Figure 5.
As illustrated in Figure 13, the coil section of the first waveguide element section 210 of the RF tag antenna 100g is formed by sides 217a to 217e.

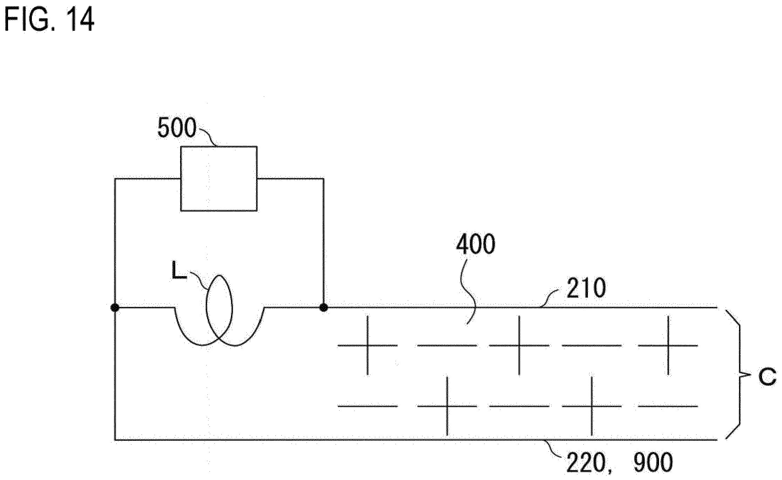

Figure 14 is a schematic diagram that illustrates an example of the equivalent circuit of the RF tag antenna 100g and the conductive member 900 depicted in Figure 13.
As illustrated in Figure 14, the equivalent circuit of Figure 13 is identical with the equivalent circuit of Figure 4. Hence, explanations thereof will not be provided.

(Yet Another Example of the Coil Section)

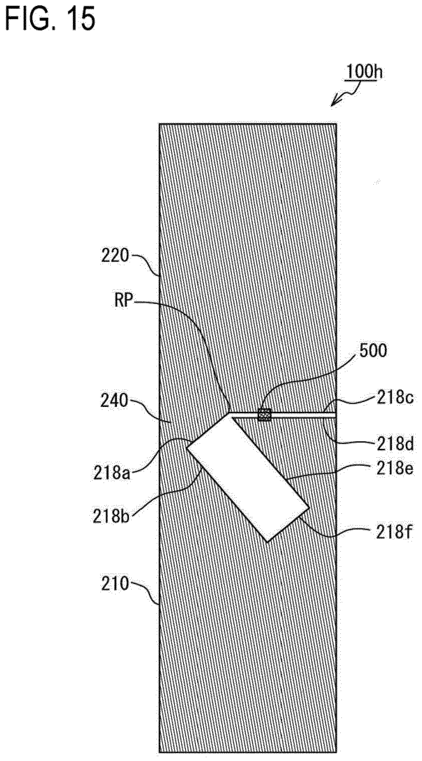

Subsequently, Figure 15 is a schematic diagram that illustrates another example of the coil section of Figure 7.
As illustrated in Figure 15, the coil section of the first waveguide element section 210 of the RF tag antenna 100h is formed by sides 218a to side 218f.

(Yet Another Example of the Coil Section)

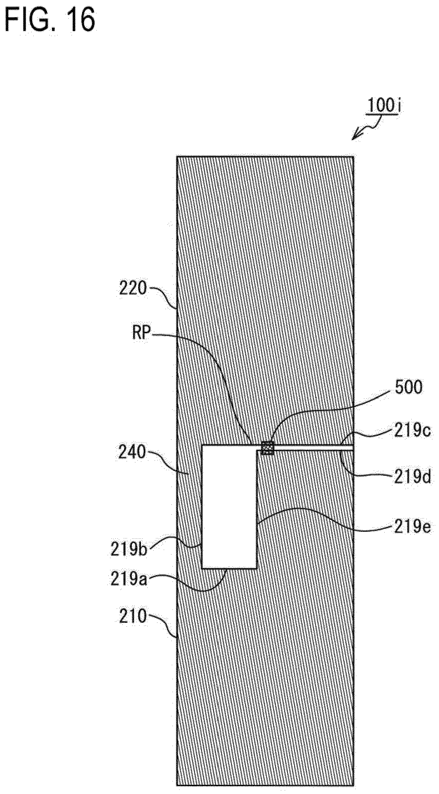

Subsequently, Figure 16 is a schematic diagram that illustrates another example of the coil section of Figure 8.

As illustrated in Figure 16, the coil section of the first waveguide element section 210 of the RF tag antenna 100i is formed by sides 219a to side 219e.

It should be noted that the RF tag antenna 100 in Figures 5 to 16 is illustrated in a state where the size of the second waveguide element section 220 is equivalent to that of the first waveguide element section 210, but the size of the second waveguide element section 220 may be reduced as illustrated in Figures 1 and 2 to stick the RF tag antenna 100 upon the conductive member 900.

As has been described in the foregoing, in the RF tag antennas 100 to 100i according to the present embodiment, since the first insulating substrate 300 is only laminated on the entire surface of the back side of the first waveguide element section 210, the capacitor section can be readily formed by the first waveguide element section 210, the second waveguide element section 220, and the conductive member 900 as well as the first insulating substrate 300 as a result of being stuck on the conductive member 900.

In addition, since the adhesive layer 400 capable of adhering to the conductive member is provided on the surface of the first insulating substrate 300, it can be readily stuck on the conductive member.

In addition, the outer shape of the first waveguide element section 210 is mainly made of a flat rectangle shape. Alternatively, it may be defined by the long side and the short side. Further, the sides of the first waveguide element section 210 forming the coil section mainly form a rectangular shape, and the relative angle difference between the long side or the short side and the rectangular shape is selected as any one of 0 degrees, 45 degrees, 90 degrees, 135 degrees, and 180 degrees, as a result of which the frequency according to the specifications can be changed by changing the inductor pattern L.

In addition, by changing the coil section to any appropriate relative angle about the axis of rotation RP according to the design specifications, the inductor pattern L can be changed without changing the coil inductance or the antenna size, and the frequency according to the design specifications can be changed.

In addition, by connecting a part of the sides of the rectangular shape of the coil section to the second waveguide element section 220, an RF tag antenna resistant to noise can be formed.

In addition, the inductor pattern L is formed by the first waveguide element section 210, the short-circuiting section 240, the second waveguide element section 220, and the power feeding section 230; and the capacitor C is formed by the first waveguide element section 210, the second waveguide element section 220, and the conductive member 900 as well as the first insulating substrate 300. As a result, a resonant circuit is formed and efficient transmission and reception can be performed.

In addition, by sticking the second waveguide element section 220 to the conductive member 900, the conductive member 900 as such can be utilized as an antenna.

In particular, when stuck on the conductive member 900, the RF tag antennas 100, 100a to 100i as such can be made low-profile.

In the present invention, the RF tag antennas 100, 100a to 100i correspond to the "RF tag antenna;" the conductive member 900 corresponds to the "conductive member," the first waveguide element section 210 corresponds to the "first waveguide element section," the second waveguide element section 220 corresponds to the "second waveguide element section," the power feeding section 230 corresponds to the "power feeding section," the short-circuiting section 240 corresponds to the "short-circuiting section," the first insulating substrate 300 corresponds to the "first insulating substrate," the adhesive layer 400 corresponds to the "adhesive layer," the IC chip 500 corresponds to the "IC chip," and any one of the RF tag antennas 100, 100a to 100i, the IC chip 500, and the conductive member 900 correspond to the "RF tag."

Whilst one preferred embodiment of the present invention has been described in the foregoing, the present invention is not limited thereto. It will be appreciated that other various embodiments may be conceived without departing the purport and scope of the present invention. Further, while the operations and effects achieved by the features of the present invention have been described in the present embodiment, these operations and effects are merely examples by which the present invention is in no way limited.

Reference Signs List

| | |
|---|---|
| 100, 100a to 100i | RF tag antenna |
| 210 | first waveguide element section |
| 220 | second waveguide element section |
| 230 | power feeding section |

| 240 | short-circuiting section |
| 300 | first insulating substrate |
| 400 | adhesive layer |
| 500 | IC chip |
| 900 | conductive member |

**Claims**

1. An RF tag antenna stuck to a conductive member, the RF tag antenna comprising:

   a first waveguide element section and a second waveguide element section that are formed to extend in a longitudinal direction;
   a first insulating substrate laminated on the first waveguide element section and stuck to the conductive member;
   a power feeding section providing electrical connection between the first waveguide element section and the second waveguide element section; and
   a short-circuiting section providing electrical connection between the first waveguide element section and the second waveguide element section, the RF tag antenna including a plate-shaped antenna section and an inductor pattern section, wherein
   the plate-shaped antenna section is formed by the first insulating substrate, the first waveguide element section, the second waveguide element section, the power feeding section, and the short-circuiting section and configured to receive radio waves transmitted from a reading device, and the inductor pattern section is formed by the first waveguide element section, the short-circuiting section, the second waveguide element section, and the power feeding section.

2. An RF tag antenna stuck to a conductive member, the RF tag antenna comprising:

   a first waveguide element section and a second waveguide element section formed to extend in a longitudinal direction;
   a first insulating substrate laminated on the first waveguide element section and stuck to the conductive member;
   a power feeding section providing electrical connection between the first waveguide element section and the second waveguide element section;
   a plate-shaped antenna section formed by the second waveguide element section and the conductive member and configured to receive radio waves transmitted from a reading device; and
   an inductor pattern section formed in the first waveguide element section.

3. The RF tag antenna according to claim 1 or 2, wherein the first insulating substrate is only laminated on an entire back surface of the first waveguide element section.

4. The RF tag antenna according to any one of claims 1 to 3, wherein an adhesive layer capable of adhering to the conductive member is provided on a surface of the first insulating substrate opposite to a surface of the first insulating substrate laminated on the first waveguide element section.

5. The RF tag antenna according to any one of claims 1 to 4, wherein
   an outer shape of the first waveguide element section mainly has a flat rectangle shape,
   a first inductor pattern forming section of the first waveguide element section forming an inductor pattern section has a rectangular shape, and
   a relative angle difference between the flat rectangle shape and the rectangular shape is any one selected from the group consisting of 0 degrees, 45 degrees, 90 degrees, 135 degrees, and 180 degrees.

6. The RF tag antenna according to any one of claims 1 to 4, wherein
   an outer shape of the first waveguide element section mainly has a flat rectangle shape,
   a first inductor pattern forming section of the first waveguide element section forming an inductor pattern section has a rectangular shape, and
   the RF tag antenna is manufactured by changing a relative angle difference between the flat rectangle shape and the first inductor pattern forming section, at a predetermined location on the first waveguide element section, to a predetermined angle in accordance with a desired frequency.

7. The RF tag antenna according to claim 5 or 6, wherein the first inductor pattern forming section is connected to a first waveguide element section with a part of the rectangular shape serving as a common connection.

8. An RF tag comprising:

a conductive member;
a first waveguide element section formed to extend in a longitudinal direction;
a second waveguide element section extending in the longitudinal direction and being stuck to the conductive member for electrical connection thereto;
a first insulating substrate laminated on the first waveguide element section and stuck to the conductive member;
a power feeding section providing electrical connection between the first waveguide element section and the second waveguide element section;
a short-circuiting section providing electrical connection between the first waveguide element section and the second waveguide element section; and
an IC chip that operates based on radio waves transmitted from the reading device, the RF tag further comprising:

a plate-shaped antenna section formed by the first insulating substrate, the first waveguide element section, the second waveguide element section, the power feeding section, and the short-circuiting section and configured to receive radio waves transmitted from a reading device;
an inductor pattern section formed by the first waveguide element section, the short-circuiting section, the second waveguide element section, and the power feeding section;
a capacitor section formed by the first waveguide element section, a second waveguide element section, and the conductive member, the first insulating substrate;
and
a resonant circuit that resonates, by the inductor pattern section and the capacitor section, in a frequency band of the radio waves transmitted from the reading device.

9. An RF tag comprising:

a conductive member;
a first waveguide element section formed to extend in a longitudinal direction;
a second waveguide element section extending in the longitudinal direction and being stuck to the conductive member for electrical connection thereto;
a first insulating substrate laminated on the first waveguide element section and stuck to the conductive member;
a power feeding section providing electrical connection between the first waveguide element section and the second waveguide element section; and
an IC chip that operates based on radio waves transmitted from the reading device, the RF tag further comprising:

a plate-shaped antenna section formed by the second waveguide element section and the conductive member and configured to receive radio waves transmitted from a reading device;
an inductor pattern section formed by the first waveguide element section;
a capacitor section formed by the first waveguide element section, a second waveguide element section, and the conductive member as well as the first insulating substrate; and
a resonant circuit that resonates, by the inductor pattern section and the capacitor section, in a frequency band of the radio waves transmitted from the reading device.

10. The RF tag according to claim 8 or 9, wherein the resonant circuit has a resonant frequency specified with inductance of the inductor pattern, capacitance of the capacitor, and equivalent capacitance inside the IC chip taken into account.

11. A method of manufacturing an RF tag antenna having a first waveguide element section and a second waveguide element section formed to extend in a longitudinal direction and being stuck to a conductive member, the method comprising:

a power feeding section forming step of forming a power feeding section providing electrical connection between the first waveguide element section and the second waveguide element section;
a short-circuiting section forming step of forming a short-circuiting section providing electrical connection between the first waveguide element section and the second waveguide element section;
an antenna forming step of forming a plate-shaped antenna section formed by the first insulating substrate, the first waveguide element section, the second waveguide element section, the power feeding section, and the short-circuiting section and configured to receive radio waves transmitted from a reading device;

an inductor pattern forming step of forming the inductor pattern section being formed by the first waveguide element section, the short-circuiting section, the second waveguide element section, and the power feeding section; and

a lamination step of laminating a first insulating substrate to be stuck to the conductive member on the first waveguide element section.

12. A method of manufacturing an RF tag antenna having a first waveguide element section and a second waveguide element section formed to extend in a longitudinal direction and being stuck to a conductive member, the method comprising:

a power feeding section forming step of forming a power feeding section providing electrical connection between the first waveguide element section and the second waveguide element section;

an antenna forming step of forming a plate-shaped antenna section formed by the second waveguide element section and the conductive member and configured to receive radio waves transmitted from a reading device;

an inductor pattern forming step of forming an inductor pattern section formed in the first waveguide element section; and

a lamination step of laminating a first insulating substrate to be stuck to the conductive member on the first waveguide element section.

13. The method of manufacturing the RF tag antenna according to claim 11 or 12, further comprising an angle determination step of changing a relative angle difference between flat rectangle shape of an outer shape of the first waveguide element section and the first inductor pattern section at a predetermined location on the first waveguide element section to a predetermined angle in accordance with a desired frequency so as to form the RF tag antenna.

EP 3 657 396 A1

FIG. 1

FIG. 2

FIG. 3

FIG. 4

FIG. 5

FIG. 6

FIG. 7

# FIG. 8

# FIG. 9

100d

220

RP

500

214b

230

240

214a

214d

214h

214j

214e

214f

214g

214i

214c

210

FIG. 10

EP 3 657 396 A1

# FIG. 11

FIG. 12

100f

220

RP

216g
240
216h
500
230
216b
216a

210

216c
216d
216e
216f
216j
216i

## FIG. 13

FIG. 14

# FIG. 15

FIG. 16

## INTERNATIONAL SEARCH REPORT

| International application No. |
|---|
| PCT/JP2018/026768 |

| A. CLASSIFICATION OF SUBJECT MATTER |
|---|
| Int.Cl. G06K19/077(2006.01)i, H01P11/00(2006.01)i, H01Q9/04(2006.01)i |
| |
| According to International Patent Classification (IPC) or to both national classification and IPC |

| B. FIELDS SEARCHED |
|---|
| Minimum documentation searched (classification system followed by classification symbols) |
| Int.Cl. G06K19/00-19/18, H01P11/00, H01Q9/04 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | WO 2017/014152 A1 (MURATA MANUFACTURING CO., LTD.) 26 January 2017 & US 2018/0144225 A1 & US 2018/0137399 A1 & WO 2017/014151 A1 | 1-13 |
| A | JP 2010-218537 A (HITACHI INFORMATION SYSTEMS, INC.) 30 September 2010 & CN 101814157 A & TW 201110028 A | 1-13 |
| A | JP 2015-149753 A (MURATA MANUFACTURING CO., LTD.) 20 August 2015 & JP 2014-147097 A & JP 2016-105647 A & US 2012/0006904 A1 & US 8690070 B2 & US 2014/0117099 A1 & WO 2010/119854 A1 | 1-13 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 September 2018 (12.09.2018) | 25 September 2018 (25.09.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 657 396 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015152827 A
- JP 2016170576 A
- JP 2014194596 A
- JP 2010262091 A
- JP 2008097426 A